# EUROPÄISCHE PATENTSCHRIFT

(11) **EP 1 445 850 B1**
(45) Veröffentlichungstag und Bekanntmachung des Hinweises auf die Patenterteilung: **30.07.2008**
(21) Anmeldenummer: 04001644.6
(22) Anmeldetag: 27.01.2004
(51) Int. Cl.: H02K 11/02, H02J 3/01, H02M 1/12, H02K 5/16

(54) **Vorrichtung zum Schutz eines Lagers einer Elektromaschine vor einem schädigenden Stromdurchgang**
Arrangement for protecting the bearing of an electrical machine against demaging shaft current
Dispositif de protection d'un palier contre un courant parasite détériorant

(30) Priorität: 07.02.2003 DE 20301956 U
(43) Veröffentlichungstag der Anmeldung: 11.08.2004
(73) Patentinhaber: AB SKF, 415 50 Göteborg (SE)
(72) Erfinder: Buschbeck, Frank, 1230 Wien (AT); Gröschl, Martin, 1220 Wien (AT); Preisinger, Gerwin, 4400 Steyr (AT)
(74) Vertreter: Gosdin, Michael

(56) Entgegenhaltungen:
- WO-A-02/101911
- GB-A- 2 377 037
- JP-A- 10 014 159
- JP-A- 2000 270 520
- JP-A- 2003 032 944

## Beschreibung

Die Erfindung betrifft eine Vorrichtung zum Schutz eines Lagers einer Elektromaschine vor einem Stromdurchgang.

Bei Elektromaschinen, beispielsweise bei Elektromotoren, die mittels eines Lagers drehbar gelagert sind, besteht die Gefahr, dass es zu einem Stromfluss durch das Lager kommt und die damit verbundene Funkenerosion zu Lagerschäden führt. Der Stromfluss durch das Lager kann dadurch entstehen, dass die an den Anschlussklemmen des Elektromotors anliegenden Spannungen über Streukapazitäten, beispielsweise aus den Statorwicklungen in den Rotor des Elektromotors einkoppeln. Die damit verbundenen Stromflüsse bewirken letztendlich, dass am Lager eine Spannung entsteht, die größer sein kann als die Durchschlagsfestigkeit des Schmierfilms im Lager und somit eine Funkenerosion auslösen kann. Besonders kritisch ist die Situation, bei Elektromotoren, die mit Frequenzumrichtern betrieben werden, da dort besonders hohe, impulsförmige Spannungsverläufe an den Anschlussklemmen gegenüber dem Motorgehäuse und dem Rotor auftreten und somit auch vergleichsweise hohe Spannungen am Lager entstehen.

In der Regel werden Lager gegen einen unerwünschten Stromdurchgang dadurch geschützt, dass eine elektrische Isolierung zur Verhinderung des Stromdurchgangs vorgesehen wird. Dies kann allerdings je nach den speziellen Gegebenheiten der Anwendung mit einem hohen Aufwand verbunden sein. Außerdem stellt eine gleichstrommäßige elektrische Isolierung des Lagers nicht immer einen ausreichenden Schutz dar. So besteht beispielsweise bei hochfrequenten Störströmen die Gefahr, dass eine Einkopplung in das Lager auf kapazitivem Wege erfolgt.

In diesem Zusammenhang ist es aus dem Fachaufsatz "High Frequency Leakage Current Reduction Based on a Common-Mode Voltage Compensation Circuit" in der Zeitschrift IEEE 1996, Seiten 1961 bis 1967 bereits bekannt, hochfrequente Störströme mit Hilfe einer Kompensationsschaltung zu kompensieren. Die Verdrahtung ist dabei so ausgelegt, dass die Kompensation bereits im Leistungsstromweg stattfindet, d. h. noch vor der angeschlossenen Last. Dies hat den Nachteil, dass die Kompensationsschaltung in den Leistungsstromkreis einbezogen wird und somit deren Komponenten für vergleichsweise hohe Leistungen ausgelegt sein müssen. Außerdem erhöht jede in den Leistungsstromkreis eingefügte reaktive Komponente wie z. B. eine Induktivität, eine Kapazität oder ein Filter, die Zahl der Resonanzfrequenzen, bei deren Anregung kaum vorhersagbare Überspannungen auftreten können. Da bei einem Einsatz eines Frequenzumrichters davon auszugehen ist, dass weitgehend alle diese Resonanzfrequenzen angeregt werden können, besteht ein hohes Risiko, dass eine derartige Überspannung entsteht.

Aus der JP 100 14 159 A ist es bekannt, den Strom durch ein Lager eines Elektromotors zu reduzieren oder zu eliminieren. Dadurch soll der Schaden durch Elektrokorrosion des Lagers, welche durch Stromfluss verursacht wird, bei einem herkömmlichen Elektromotor ohne die Verwendung spezieller Mittel für den Motorkörper reduziert oder eliminiert werden. Hierzu wird ein Mittel zur

Reduzierung oder Eliminierung des Stroms durch das Lager in einen geschlossenen Stromkreis, in dem dieser Strom fließt, geschaltet.

Der Erfindung liegt die Aufgabe zugrunde, ein Lager einer Elektromaschine vor einem Stromdurchgang zu schützen.

Diese Aufgabe wird durch die Merkmalskombination des Anspruchs 1 gelöst.

Die Erfindung wird bei einer Elektromaschine eingesetzt, die einen Stator aufweist und einen Rotor, der mittels wenigstens eines Lagers relativ zum Stator drehbar gelagert ist. Die erfindungsgemäße Vorrichtung zeichnet sich dadurch aus, dass eine Kompensationsschaltung zur Erzeugung eines Kompensationsstroms für die Kompensation eines beim Betrieb der Elektromaschine entstehenden Störstroms durch das Lager vorgesehen ist und ein Koppelelement zum direkten oder indirekten Einkoppeln des Kompensationsstroms in das Lager.

Die Erfindung hat den Vorteil, dass dadurch ein zuverlässiger Schutz des Lagers vor einem Stromdurchgang und somit vor einer damit verbundenen potentiellen Beschädigung des Lagers gewährleistet ist. Die Schutzmaßnahme setzt dabei konkret an der Stelle an, die geschützt werden soll, nämlich am Lager. Dadurch kann der Aufwand für die Realisierung der erfindungsgemäßen Vorrichtung vergleichsweise gering gehalten werden, da die Vorrichtung leistungsmäßig nicht für den Betrieb der Elektromaschine sondern lediglich für die Kompensation des Störstroms durch das Lager ausgelegt werden muss. Ein weiterer Vorteil der Erfindung besteht folglich darin, dass sich die erfindungsgemäße Vorrichtung weitgehend unabhängig von der Leistungsklasse der Elektromaschine realisieren lässt und auch nachträglich in eine bestehende Anlage eingebaut werden kann, da in die Ansteuerung der Elektromaschine nicht eingegriffen wird.

Die Kompensationsschaltung kann einen künstlichen Sternpunkt zur Bereitstellung einer Stempunktspannung aufweisen, an dem die für den Betrieb der Elektromaschine vorgesehenen Phasenspannungen anliegen. Der künstliche Stempunkt wird in der Regel durch drei gleiche Impedanzen gebildet. Auf diese Weise kann mit relativ einfachen Mitteln ein Referenzsignal für die Kompensation bereitgestellt werden.

Weiterhin kann die Kompensationsschaltung einen Umpol-Transformator aufweisen, dem primärseitig die Stempunktspannung ganz oder anteilig zugeführt wird und der sekundärseitig eine zur Stempunktspannung gegenphasige Spannung erzeugt. Die Kompensationsschaltung kann insbesondere eine Amplituden-Anpassungsstufe aufweisen, die zwischen dem künstlichen Sternpunkt und dem Umpol-Transformator geschaltet ist und an den Umpol-Transformator einen einstellbaren Bruchteil der Stempunktspannung anlegt. Der Umpol-Transformator kann mehrere Wicklungsabgriffe aufweisen. Weiterhin kann der Umpol-Transformator sekundärseitig mit einem Eingang einer Frequenzgangs-Anpassungsstufe verbunden sein, die der Angleichung des Frequenzgangs des Kompensationsstroms an den Störstrom dient. Bei den vorstehend beschriebenen Komponenten handelt es sich jeweils um Standardbausteine, die in den unterschiedlichsten Ausführungsformen erhältlich sind, so dass eine optimale Ausbildung der erfindungsgemäßen Vorrichtung für den jeweiligen Anwendungsfall problemlos möglich ist.

Der Ausgang der Frequenzgang-Anpassungsstufe ist mit dem Koppelelement verbunden. Dabei ist das Koppelelement insbesondere so angeordnet, dass eine Einkopplung des Kompensationsstroms in eine Rotorwelle erfolgt, mit der der Rotor im Lager drehbar gelagert ist. Das Koppelelement ist vorzugsweise als Kondensator ausgebildet. Auf diese Weise kann der Kompensationsstrom berührungsfrei in die Welle und damit in das Lager eingekoppelt werden, so dass bei der Einkopplung des Kompensationsstroms keine Verschleißprobleme im Koppelelement auftreten.

Die Erfindung wird nachfolgend anhand des in der Zeichnung dargestellten Ausführungsbeispiels erläutert.

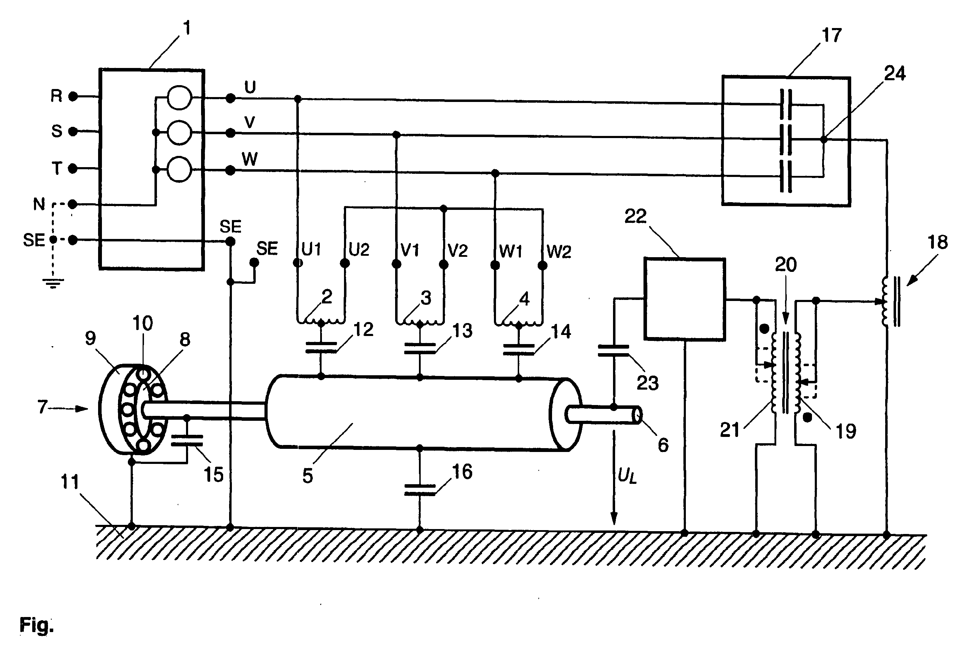

Die einzige Figur zeigt ein Ausführungsbeispiel der erfindungsgemäßen Kompensationsschaltung, die in eine Schaltung zur Ansteuerung eines Elektromotors eingebunden ist. Die Ansteuerung des Elektromotors erfolgt mittels eines Frequenzumrichters 1, der ausgangsseitig drei Phasenspannungen U, V und W liefert, die in Form einer Sternschaltung an eine erste Statorwicklung 2 eine zweite Statorwicklung 3 und eine dritte Statorwicklung 4 angelegt sind, d. h. jede der drei Statorwicklungen 2, 3 und 4 ist mit einem Ende mit einem der Ausgänge des Frequenzumrichters 1 verbunden, an dem eine der Spannungen U, V oder W anliegt. Die jeweils anderen Enden der drei Statorwicklungen 2, 3 und 4 sind untereinander verbunden. Neben den Statorwicklungen 2, 3 und 4 weist der Elektromotor einen Rotor 5 mit einer Rotorwelle 6 auf, die mittels eines Wälzlagers 7 relativ zu den Statorwicklungen 2, 3 und 4 drehbar gelagert ist. Das Wälzlager 7 weist einen Innenring 8, einen Außenring 9 und zwischen dem Innenring 8 und dem Außenring 9 angeordnete Wälzkörper 10 auf. Der Innenring 8 ist mit der Rotorwelle 6 drehfest und elektrisch leitend verbunden. Der Außenring 9 kann beispielsweise in eine Bohrung eines nur symbolisch dargestellten Gehäuses 11 eingepresst sein und somit drehfest und elektrisch leitend mit dem Gehäuse 11 verbunden sein. Die Rotorwelle 6 ist in der Regel mittels wenigstens eines weiteren Wälzlagers 7 gelagert, dass der besseren Übersicht halber in Figur 1 allerdings nicht dargestellt ist.

Die beschriebene Beschaltung bzw. der beschriebene Aufbau des Elektromotors haben zur Folge, dass eine Reihe von Streukapazitäten vorhanden ist. Über die jeweils trotz einer gleichstrommäßigen Isolierung Spannungen eingekoppelt werden können. In Figur 1 wurden die Streukapazitäten, soweit sie für die Erfindung relevant sind, jeweils durch ein Schaltsymbol für einen Kondensator dargestellt. Im einzelnen besteht zwischen der ersten Statorwicklung 2 und dem Rotor 5 eine erste Streukapazität 12, zwischen der zweiten Statorwicklung 3 und dem Rotor 5 eine zweite Streukapazität 13 und zwischen der dritten Statorwicklung 4 und dem Rotor 5 eine dritte Streukapazität 14. Weiterhin wird durch das Wälzlager 7 eine vierte Streukapazität 15 ausgebildet, die letztendlich zwischen dem Außenring 9 und der Rotorwelle 6 wirksam ist. Schließlich besteht noch eine fünfte Streukapazität 16 zwischen dem Rotor 5 und dem Gehäuse 11. Die Streukapazitäten 12, 13, 14, 15 und 16 haben zur Folge, dass infolge der Stempunkt-Spannung die im Bereich der Zusammenschaltung der drei Statorwicklungen 2, 3 und 4 anliegt, ein unerwünschter kapazitiver Störstrom zwischen den drei Statorwicklungen 2, 3 und 4 und dem Rotor 5 und somit auch der Rotorwelle 6 fließt. Entsprechend kommt es zu einem Stromfluß zwischen dem Rotor 5 bzw. der Rotorwelle 6 und dem geerdeten Gehäuse 11. Dieser Störstrom bewirkt, dass zwischen dem Rotor 5 und dem Gehäuse 11 und daher auch am Wälzlager 7 bzw. an den Wälzlagern 7 eine Spannung U_{L} entsteht, die ohne weitere Maßnahmen oftmals größer als die Durchschlagsfestigkeit des Schmierfilms im Wälzlager 7 ist, die typischerweise ca. 0,5 Volt beträgt. Die Spannung U_{L} weist typischerweise Werte von 3 bis 7 % der an den Statorwicklungen gegenüber dem Gehäuse 11 anliegenden Spannungen auf. Durch die am Wälzlager 7 anliegende Spannung U_{L} kann somit eine Funkenerosion ausgelöst werden, die zu einer Schädigung des Wälzlagers 7 führen kann.

Dies wird durch die im folgenden beschriebenen Schaltungskomponenten verhindert, mit deren Hilfe ein gegenüber dem Störstrom gleichgroßer aber gegenphasiger Strom kapazitiv in die Rotorwelle 6 eingekoppelt wird. Für die Erzeugung des Kompensationsstroms ist u. a. ein künstlicher Stempunkt 17 vorgesehen, in dem die Zuleitungen vom Frequenzumrichter 1 zu den Statorwicklungen 2, 3 und 4 über je einen Kondensator zusammengeführt werden. Am Ausgang 24 des künstlichen Stempunktes 17 entsteht eine gleiche Spannung wie sie im Inneren des Motors aufgrund der Streukapazitäten 12, 13 und 14 auftritt. Die Spannung U_{L} resultiert aus der kapazitiven Spannungsteilung zwischen den Streukapazitäten 12, 13, 14 einerseits und 15, 16 andererseits. An den Stempunkt 17 ist eine Amplitudenanpassung 18 angeschlossen, die weiterhin mit dem Gehäuse 11 verbunden ist. Die Amplitudenanpassung 18 weist einen variablen Abgriff auf, mit dessen Hilfe ein gewünschter Bruchteil der vom künstlichen Stempunkt 17 ausgegebenen Spannung abgegriffen werden kann. Der variable Abgriff der Amplitudenanpassung 18 ist mit einer Primärwicklung 19 eines Umpoltransformators 20 verbunden, die weiterhin an das Gehäuse 11 angeschlossen ist. Eine Sekundärwicklung 21 des Umpoltransformators 20 ist zum einen ebenfalls an das Gehäuse 11 angeschlossen und zum anderen an einen Eingang einer Frequenzganganpassung 22. Der Wickelsinn der Primärwicklung 19 und der Sekundärwicklung 21 des Umpoltransformators 20 verläuft in entgegengesetzter Richtung, so dass an der Sekundärwicklung 21 eine Spannung ausgegeben wird, die invers zu der an der Primärwicklung 19 anliegenden Spannung ist. Die Frequenzganganpassung 22 ist ausgangsseitig mit einem Koppelkondensator 23 verbunden, dessen eine Elektrode an der Rotorwelle 6 angeschlossen ist. Weiterhin ist die Frequenzganganpassung 22 noch mit dem Gehäuse 11 verbunden.

Statt eine Amplitudenanpassung 18 als eine eigene Komponente vorzusehen kann deren Funktion auch in den Umpoltransformator 20 integriert sein. Hierzu wird die Primärwicklung 19 des Umpoltransformators 20 mit dem Stempunkt 17 und dem Gehäuse 11 verbunden und an der Sekundärwicklung sind mehrere Anzapfungen vorgesehen, so dass die Amplitude der Spannung, die der Frequenzganganpassung 22 zugeführt wird, durch Auswahl einer geeigneten Anzapfung variiert werden kann.

Bei der Kompensation der in den Rotor 5 eingekoppelten Störströme wird im einzelnen folgendermaßen vorgegangen: Mit Hilfe der Amplitudenanpassung 18 wird ein geeigneter Bruchteil der am künstlichen Sternpunkt 17 anliegenden Spannung in den Umpoltransformator 20 eingespeist und auf diese Weise eine invers gepolte Spannung erzeugt. Für die weitere Verarbeitung wird somit nur ein Bruchteil der am künstlichen Stempunkt 17 ausgegebenen Spannung verwendet und dementsprechend sind die dabei eingesetzten Komponenten auch nur für diesen Bruchteil der Spannung auszulegen. Die Frequenzganganpassung 22 passt den Frequenzgang des aus dieser Spannung resultierenden Stroms an jenen des Störstroms an, um eine möglichst exakte Kompensation zu ermöglichen. Der derart erzeugte Kompensationsstrom wird über den Koppelkondensator 23 in die Rotorwelle 6 eingespeist und entspricht im Idealfall betragsmäßig der Summe sämtlicher in den Rotor 5 eingespeisten Störströme, so dass es in Folge des umgekehrten Vorzeichens insgesamt zu keiner oder allenfalls einer geringen Nettostromeinspeisung in den Rotor 5 kommt. Somit liegt am Wälzlager 7 bzw. an den Wälzlagern 7 allenfalls eine geringe Spannung U_{L} an , die nicht ausreicht, eine Schädigung des Wälzlagers 7 hervorzurufen. Die Einkopplung des Kompensationsstromes in die Rotorwelle 6 kann durch eine geeignete Ausbildung des Kondensators 23 als luftisolierter Kondensator in Form eines Aufsteckelements auf die Rotorwelle 6 ohne Verschleißteile erfolgen. Alternativ dazu ist es in gleicher Weise möglich, den Kompensationsstrom an anderer Stelle in den Rotor 5 oder in den Innenring 8 des Wälzlagers 7 einzukoppeln.

### Bezugszeichen

- 1: Frequenzumrichter
- 2: erste Statorwicklung
- 3: zweite Statorwicklung
- 4: dritte Statorwicklung
- 5: Rotor
- 6: Rotorwelle
- 7: Wälzlager
- 8: Innenring
- 9: Außenring
- 10: Wälzkörper
- 11: Gehäuse
- 12: erste Streukapazität
- 13: zweite Streukapazität
- 14: dritte Streukapazität
- 15: vierte Streukapazität
- 16: fünfte Streukapazität
- 17: künstlicher Stempunkt
- 18: Amplitudenanpassung
- 19: Primärwicklung
- 20: Umpoltransformator
- 21: Sekundärwicklung
- 22: Frequenzganganpassung
- 23: Koppelkondensator
- 24: Ausgang des künstlichen Sternpuktes

## Patentansprüche

1. Vorrichtung zum Schutz eines Lagers (7) einer Elektromaschine vor einem schädigenden Stromdurchgang, wobei die Elektromaschine einen Stator (11) aufweist und einen Rotor (5), der mittels wenigstens eines Lagers (7) relativ zum Stator (11) drehbar gelagert ist, **dadurch gekennzeichnet, dass** eine Kompensationsschaltung zur Erzeugung eines Kompensationsstroms für die Kompensation eines beim Betrieb der Elektromaschine entstehenden Störstroms durch das Lager (7) vorgesehen ist und ein Koppelelement (23) zum direkten oder indirekten Einkoppeln des Kompensationsstroms in das Lager (7).

2. Vorrichtung nach Anspruch 1, **dadurch gekennzeichnet, dass** die Kompensationsschaltung einen künstlichen Sternpunkt (17) zur Bereitstellung einer Stempunktspannung aufweist, an dem die für den Betrieb der Elektromaschine vorgesehenen Phasenspannungen anliegen.

3. Vorrichtung nach Anspruch 2, **dadurch gekennzeichnet, dass** der künstliche Stempunkt (17) durch drei gleiche Impedanzen gebildet wird

4. Vorrichtung nach einem der Ansprüche 2 oder 3, **dadurch gekennzeichnet, dass** die Kompensationsschaltung einen Umpoltransformator (20) aufweist, dem primärseitig die Stempunktspannung ganz oder anteilig zugeführt wird und der sekundärseitig eine zur Sternpunktspannung gegenphasige Spannung erzeugt.

5. Vorrichtung nach Anspruch 4, **dadurch gekennzeichnet, dass** die Kompensationsschaltung eine Amplituden-Anpassungsstufe (18) aufweist, die zwischen dem künstlichen Sternpunkt (17) und dem Umpoltransformator (20) geschaltet ist und an den Umpoltransformator (20) einen einstellbaren Bruchteil der Stempunktspannung anlegt.

6. Vorrichtung nach einem der Ansprüche 4 oder 5, **dadurch gekennzeichnet, dass** der Umpoltransformator (20) sekundärseitig mehrere Wicklungsabgriffe aufweist,

7. Vorrichtung nach einem der Ansprüche 4 bis 6, **dadurch gekennzeichnet, dass** der Umpoltransformator (20) sekundärseitig mit einem Eingang einer Frequenzgang-Anpassungsstufe (22) verbunden ist, die der Angleichung des Frequenzgangs des Kompensationsstroms an den Störstrom dient.

8. Vorrichtung nach Anspruch 7, **dadurch gekennzeichnet, dass** der Ausgang der Frequenzgang-Anpassungsstufe (22) mit dem Koppelelement (23) verbunden ist.

9. Vorrichtung nach einem der vorhergehenden Ansprüche, **dadurch gekennzeichnet, dass** das Koppelelement (23) so angeordnet ist, das eine Einkopplung des Kompensationsstroms in eine Rotorwelle (6) erfolgt, mit der der Rotor (5) im Lager (7) drehbar gelagert ist.

10. Vorrichtung nach einem der vorhergehenden Ansprüche, **dadurch gekennzeichnet, dass** das Koppelelement (23) als Kondensator ausgebildet ist.

## Claims

1. An apparatus for protecting a bearing (7) of an electric machine from a damaging passage of current, wherein the electric machine has a stator (11) and a rotor (5) which is mounted by means of at least one bearing (7) so as to be able to rotate relative to the stator (11), **characterised in that** a compensating circuit is provided for generating a compensating current for the compensation of an interference current through the bearing occurring during the operation of the electric machine, and a coupling element (23) for the direct or indirect coupling of the compensating current into the bearing (7):

2. An apparatus according to Claim 1, **characterised in that** the compensating circuit has an artificial neutral point (17) for the provision of a neutral point voltage, to which the phase voltages provided for the operation of the electric machine are applied.

3. An apparatus according to Claim 2, **characterised in that** the artificial neutral point (17) is formed by three equal impedances.

4. An apparatus according to either Claim 2 or Claim 3, **characterised in that** the compensating circuit has a polarity-reversing transformer (20), to which the neutral point voltage is fed wholly or proportionately on the primary side and which on the secondary side generates a voltage in phase opposition to the neutral voltage.

5. An apparatus according to Claim 4, **characterised in that** the compensating circuit has an amplitude adaptation stage (18) which is connected between the artificial neutral point (17) and the polarity-reversing transformer (20) and applies an adjustable fraction of the neutral point voltage to the polarity-reversing transformer (20).

6. An apparatus according to either Claim 4 or Claim 5, **characterised in that** the polarity-reversing transformer (20) has a plurality of winding taps on the secondary side.

7. An apparatus according to any one of Claims 4 to 6, **characterised in that** the polarity-reversing transformer (20) is connected on the secondary side to the input of a frequency response adaptation stage (22) which serves to match the frequency response of the compensating current to the interference current.

8. An apparatus according to Claim 7, **characterised in that** the output of the frequency response adaptation stage (22) is connected to the coupling element (23)

9. An apparatus according to any one of the preceding Claims, **characterised in that** the coupling element (23) is arranged so that coupling of the compensating current into a rotor shaft (6) takes place, with which the rotor (5) is rotatably mounted in the bearing (7).

10. An apparatus according to any one of the preceding Claims, **characterised in that** the coupling element (23) is in the form of a capacitor.

## Revendications

1. Dispositif de protection contre un courant parasite détériorant, d'un palier (7) d'une machine électrique comprenant un stator (11) et un rotor (5) qui peut tourner par rapport au stator dans au moins un palier (7), **caractérisé en ce qu'**il est prévu un circuit de compensation pour produire un courant afin de compenser un courant parasite traversant le palier (7) quand la machine électrique est en service, ainsi qu'un élément d'accouplement (23) pour faire entrer directement ou indirectement le courant de compensation dans le palier (7).

2. Dispositif selon la revendication 1, **caractérisé en ce que** le circuit de compensation présente un point neutre (17) artificiel afin de mettre à disposition une tension de point étoile avec application sur ce point des tensions de phase prévues pour faire fonctionner la machine électrique.

3. Dispositif selon la revendication 2, **caractérisé en ce que** le point étoile artificiel ((17) est constitué par trois impédances égales.

4. Dispositif selon la revendication 2 ou 3, **caractérisé en ce que** le circuit de compensation comprend un transformateur à inversion de polarité (20) qui reçoit au primaire tout ou partie de la tension du point neutre et qui délivre au secondaire une tension en opposition de phase avec la tension du point neutre.

5. Dispositif selon la revendication 4, **caractérisé en ce que** le circuit de compensation comprend un étage d'adaptation d'amplitude (18), qui est monté entre le point neutre artificiel (17) et le transformateur à inversion de polarité (20) et qui applique à ce dernier une fraction réglable de la tension du point neutre.

6. Dispositif selon la revendication 4 ou 5, **caractérisé en ce que** le transformateur à inversion de polarité (20) présente du côté secondaire plusieurs prises d'enroulement.

7. Dispositif selon une des revendications 4 à 6, **caractérisé en ce que** le transformateur à inversion de polarité (20) présente du côté secondaire une entrée d'un étage d'adaptation de réponse fréquentielle (22) qui sert à compenser la réponse fréquentielle du courant de compensation du courant parasite.

8. Dispositif selon la revendication 7, **caractérisé en ce que** la sortie de l'étage d'adaptation de réponse fréquentielle (22) est reliée à l'élément d'accouplement (23).

9. Dispositif selon une des revendications précédentes, **caractérisé en ce que** l'élément d'accouplement (23) est disposé de manière à faire entrer le courant de compensation dans un arbre de rotor (6) par lequel le rotor (5) est monté en rotation dans le palier (7).

10. Dispositif selon une des revendications précédentes, **caractérisé en ce que** l'élément d'accouplement (23) est constitué par un condensateur.
